# EUROPEAN PATENT APPLICATION

(11) **EP 2 178 336 A1**
(43) Date of publication of application: **21.04.2010**
(21) Application number: 08783805.8
(22) Date of filing: 30.07.2008
(51) Int. Cl.: H04W 88/08, H03F 3/20, H04B 7/26

(54) **A METHOD, DEVICE AND BASE STATION SYSTEM FOR BASE STATION COMPATIBLE WITH HIGH GAIN TOWER MOUNTED AMPLIFIER**

(30) Priority: 26.09.2007 CN 200710077391
(71) Applicant: Huawei Technologies Co., Ltd., Longgang District, Shenzhen Guangdong 518129 (CN)
(72) Inventor: MA, Guotian, Guangdong 518129 (CN); LI, Qing, Guangdong 518129 (CN)
(74) Representative: Pfenning, Meinig & Partner GbR
(86) International application number: PCT/CN2008/071812
(87) International publication number: WO 2009/039738

(57) **Abstract**

A method, apparatus, and base station system for making a base station compatible with a high-gain Tower Mounted Amplifier (TMA) are disclosed. The method includes: receiving an uplink signal sent by the TMA; attenuating the uplink signal from the TMA; and sending the attenuated uplink signal to the base station. The present invention overcomes the incompatibility between the new base station and the gain of the existing TMA in the upgrade of the base station system.

## Description

### Field of the Invention

The present invention relates to communication technologies, and in particular, to a method, apparatus, and base station system for making a base station compatible with a high-gain Tower Mounted Amplifier (TMA).

### Background of the Invention

When upgrading or expanding the existing communication equipment, operators sometimes need to add new base stations. The antenna and feeder components in the base station system are costly, and involve a high cost of installation because they are installed on a tall tower. In the process of adding a new base station, reuse of the antenna and feeder components is important to cost control.

The TMA is an important antenna and feeder component installed near the antenna on the tower. A necessary condition for compatibility between the TMA and the new base station is that the new base station needs to support the gain of the TMA of this model. If the gain of the TMA is beyond the range supported by the new base station, the new base station is not compatible with the TMA. For example, the Radio Frequency (RF) front end of a base station that supports a low-gain TMA is suitable only for working with a low-gain (such as 12 dB) TMA. When such an RF front end works with a high-gain TMA, the RF front end of the base station is blocked and the intermodulation is out of specifications. Therefore, the base station that supports the low-gain TMA does not support the high-gain (such as 24 dB or 30 dB) TMA.

The prior art for solving such a problem is to replace the high-gain TMA with a low-gain TMA.

The prior art has at least the following defects:
(1) A new TMA is required, which increases the equipment cost.
(2) The person who replaces the TMA needs to climb up the tower, which increases the upgrade difficulty and labor cost.
(3) The replaced TMA is not faulty, but is no longer useful because it is incompatible with the new base station, which leads to waste.

Therefore, the solution in the prior art involves huge costs in the implementation process.

### Summary of the Invention

The embodiments of the present invention provide a method, apparatus and base station system for making a base station compatible with a high-gain TMA so that the new base station matches the gain of the existing TMA to avoid replacing the existing TMA.

One aspect, a method for making a base station compatible with a high-gain TMA includes:
receiving an uplink signal sent by the TMA;
attenuating the uplink signal from the TMA; and
sending the attenuated uplink signal to the base station.

One aspect, an apparatus for making a base station compatible with a high-gain TMA includes:
a downlink signal filter, electrically coupled between a first port and a second port of the apparatus, and adapted to transmit downlink signals and isolate uplink signals;
a first uplink signal filter, electrically coupled between the first port and a signal attenuator, and adapted to transmit the uplink signals and isolate the downlink signals;
a second uplink signal filter, electrically coupled between the second port and the signal attenuator, and adapted to transmit the uplink signals and isolate the downlink signals; and
the signal attenuator, electrically coupled between the first uplink signal filter and the second uplink signal filter, and adapted to attenuate the uplink signals.

One aspect, a base station system provided in an embodiment of the present invention includes a base station and a TMA, and further includes:
an apparatus for making the base station compatible with a high-gain TMA, electrically coupled between the TMA and the base station, and adapted to: receive an uplink signal sent by the TMA, attenuate the uplink signal from the TMA, and send the attenuated uplink signal to the base station.

Compared with the prior art, the present invention offers the following benefits:
(1) When the new base station is not compatible with the gain of the TMA, it is not necessary to replace the existing TMA, which saves the upgrade cost.
(2) The upgrade process involves no operation on the tower, which saves the labor cost.

### Brief Description of the Drawings

FIG. 1 is a flowchart of a method for making a base station compatible with a high-gain TMA in a first embodiment of the present invention;
FIG. 2 shows an apparatus for making a base station compatible with a high-gain TMA in a second embodiment of the present invention;
FIG. 3 shows a base station system including an apparatus for making a base station compatible with a high-gain TMA in the second embodiment of the present invention;
FIG. 4 shows an apparatus for making a base station compatible with a high-gain TMA in a third embodiment of the present invention, where the apparatus includes a direct current bypass device;
FIG. 5 shows a base station system including an apparatus for making a base station compatible with a high-gain TMA in the third embodiment of the present invention;
FIG. 6 shows an apparatus for making a base station compatible with a high-gain TMA in a fourth embodiment of the present invention;
FIG. 7 shows a base station system including an apparatus for making a base station compatible with a high-gain TMA in the fourth embodiment of the present invention;
FIG. 8 shows an apparatus for making a base station compatible with a high-gain TMA in a fifth embodiment of the present invention; and
FIG. 9 shows a base station system including an apparatus for making a base station compatible with a high-gain TMA in the fifth embodiment of the present invention.

### Detailed Description of the Embodiments

The present invention aims to fully use the existing antenna and feeder components to reduce the upgrade cost in the process of upgrading a base station system. To make the technical solution, objectives and merits of the present invention clearer, the following describes the embodiments of the present invention in more detail with reference to accompanying drawings.

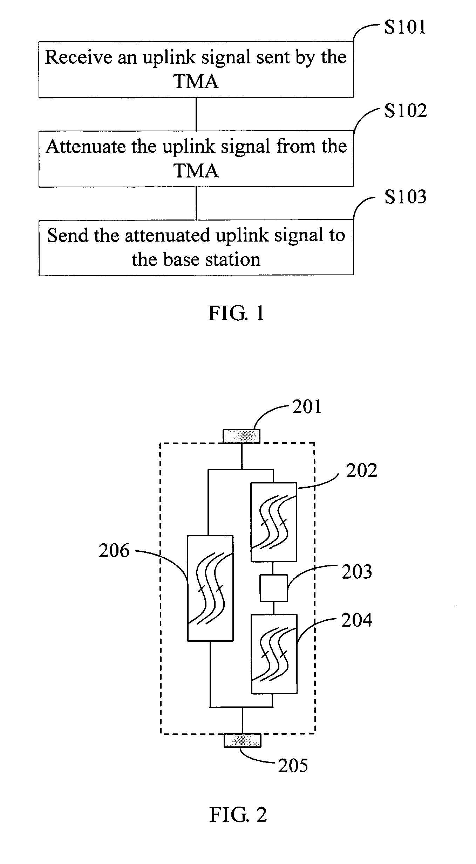

The first embodiment of the present invention relates to a method for making a base station compatible with a high-gain TMA. As shown in FIG. 1, the method includes the following steps:
S101. Receive an uplink signal sent by a TMA.

The uplink signal here refers to the signal sent from a mobile station to a base station.
S102. Attenuate the uplink signal from the TMA.

The extent of attenuating the uplink signal may be set and adjusted according to the gain of the TMA and the gain supported by the base station. After the signal is attenuated, the gain of the signal falls within the range supported by the base station. In the process of attenuating the uplink signal, a signal attenuator may be applied. The signal attenuator may be a parameter-variable signal attenuator or a parameter-invariable signal attenuator. The signal attenuator here may be realized through a resistor network or a coupler or a filter.

S103. Send the attenuated uplink signal to a base station.

In addition, the method may include the following step:
S104. Forward the downlink signal sent by the base station to the TMA.

The downlink signal here refers to the signal sent from the base station to the mobile station. To save the cost of constructing the site, one feeder cable is generally used to transmit both uplink signals and downlink signals simultaneously. Here the downlink signal does not need to be attenuated. In this step, the downlink signal is forwarded to the TMA directly.

The foregoing method solves the equipment compatibility problem caused by the TMA gain which exceeds the range supported by the base station, without replacing the TMA.

The second embodiment of the present invention relates to an apparatus for making a base station compatible with a high-gain TMA. As shown in FIG. 2, the apparatus includes:
a downlink signal filter 206, electrically coupled between a first port 201 and a second port 205 of the apparatus, and adapted to transmit downlink signals and isolate uplink signals;
a first uplink signal filter 202, electrically coupled between the first port 201 and a sign al attenuator 203, and adapted to transmit uplink signals and isolate downlink signals;
a second uplink signal filter 204, electrically coupled between the second port 202 and the signal attenuator 203, and adapted to transmit uplink signals and isolate downlink signals; and
the signal attenuator 203, electrically coupled between the first uplink signal filter 202 and the second uplink signal filter 204, and adapted to attenuate uplink signals.

It is assumed that at the time the apparatus for making a base station compatible with a TMA is installed, the first port 201 is connected to the TMA or the feeder (the feeder is applied if a long distance exists between the TMA and the base station), and the second port 205 is connected to the antenna sending/receiving interface of the base station. The uplink signal received by the antenna flows along the following path in the apparatus: the first port 201 -> the first uplink signal filter 202 -> the signal attenuator 203 -> the second uplink signal filter 204 -> the second port 205. The downlink signal filter 206 exerts outband suppression of the uplink signal. Hence, the uplink signal that comes in through the first port 201 doesn't bypass the attenuator by entering the downlink signal filter 206. In this way, the uplink signal is attenuated. The downlink signal of the base station flows along the following path in the apparatus: the second port 205 -> the downlink signal filter 206 -> the first port 201. In this way, the downlink signal passes through the apparatus smoothly. The first uplink signal filter 202 and the second uplink signal filter 204 exert outband suppression of the downlink signal. Therefore, the downlink signal does not enter the attenuator through the uplink signal filter, thus ensuring normal sending of the downlink signal.

The signal attenuator 203 may be a parameter-invariable signal attenuator or a parameter-variable signal attenuator (which enables adjustment of the relevant parameters of the attenuator according to specific conditions of the TMA and the base station). Here the signal attenuator may be realized through a resistor network or a coupler or a filter.

The apparatus for making a base station compatible with a TMA in this embodiment may also use the first port 201 to connect the base station, and use the second port 205 to connect the feeder. The first port 201 and the second port 205 may use a coaxial cable connector.

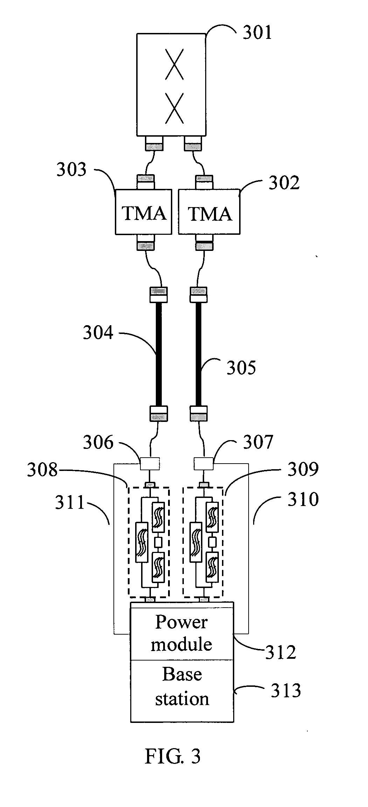

The second embodiment further provides a base station system including an apparatus for making a base station compatible with a high-gain TMA, as shown in FIG. 3.

The base station system includes: a TMA 302, a TMA 303, an apparatus 308 for making a base station compatible with a high-gain TMA, an apparatus 309 for making a base station compatible with a high-gain TMA, and a base station 313.

In addition, the base station system includes: an antenna 301, a feeder 304, a feeder 305, a T-connector 306, a T-connector 307, a bypass device 310, and a bypass device 311.

The two receiving/sending interfaces of the base station 313 are connected to the apparatus 308 and the apparatus 309; the apparatus 308 and the apparatus 309 are connected to the T-connector 306 and the T-connector 307 respectively; the T-connector 306 and the T-connector 307 are connected to the feeder 304 and the feeder 305 respectively; the feeder 304 and the feeder 305 are connected to the TMA 302 and the TMA 303 respectively; the TMA 302 and the TMA 303 are connected to the antenna 301; and the power module 312 of the base station is connected to the T-connectors through the bypass device 311 and the bypass device 310. A T-connector here is adapted to: feed the direct current of the base station from a bypass device into a feeder and a TMA, and supply power to the TMA. If the power supply function is integrated into the antenna sending/receiving interface of the base station, an extra T-connector and a capacitor may be added between the apparatus and the sending/receiving interface of the base station. The extra T-connector feeds the direct current out to a bypass device, and the capacitor isolates the direct current for the apparatus.

The foregoing embodiment is applicable to the scenario where the base station has two sending/receiving interfaces. If the base station has more than two sending/receiving interfaces, for example, 4-way diversity receiving interfaces, the gain of the TMA may be adjusted through four such apparatuses.

In the case of upgrading a base station system, the apparatus in this embodiment may be used to overcome the incompatibility between the new base station and the gain of the existing TMA without modifying the existing TMA and the new base station, thus slashing the upgrade cost.

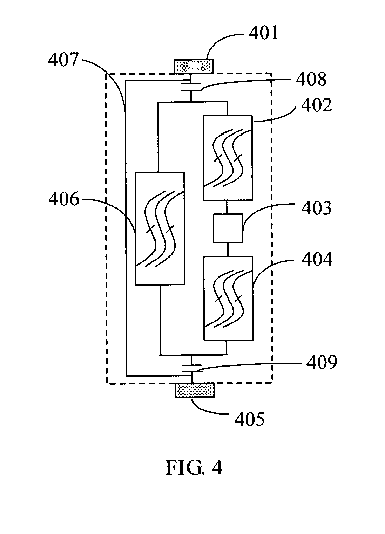

The third embodiment of the present invention relates to an apparatus for making a base station compatible with a high-gain TMA. As shown in FIG. 4, the apparatus includes: a downlink signal filter 406, a first uplink signal filter 402, a second uplink signal filter 404 and a signal attenuator 403.

The downlink signal filter 406 is electrically coupled between a first port 401 and a second port 405 of the apparatus, and is adapted to transmit downlink signals and isolate uplink signals.

The first uplink signal filter 402 is electrically coupled between the first port 401 and the signal attenuator 403, and is adapted to transmit uplink signals and isolate downlink signals.

The second uplink signal filter 404 is electrically coupled between the second port 402 and the signal attenuator 403, and is adapted to transmit uplink signals and isolate downlink signals. and

The signal attenuator 403 is electrically coupled between the first uplink signal filter 402 and the second uplink signal filter 404, and is adapted to attenuate uplink signals.

Unlike the apparatus in the second embodiment, the apparatus in the third embodiment further includes: a direct current bypass device 407, a first capacitor 408 and a second capacitor 409.

The direct current bypass device 407 is electrically coupled between the first port 401 and the second port 405, and is adapted to supply power to the TMA.

The first capacitor 408 is electrically coupled between the first port 401 and a common end of the downlink signal filter 406 and the first uplink signal filter 402, and is adapted to isolate direct current signals. and

The second capacitor 409 is electrically coupled between the second port 405 and a common end of the downlink signal filter 406 and the second uplink signal filter 404, and is adapted to isolate direct current signals.

When the sending/receiving interface of the base station is capable of supplying direct current power, namely, when the sending/receiving interface transmits direct current and alternate current signals to the TMA or the feeder together, a direct current bypass device is added inside the apparatus to implement direct current transmission from the base station to the feeder, and a capacitor is set to isolate direct current.

The first capacitor 408 and the second capacitor 409 may be distributed parameter capacitors. For example, a conductor for transmitting signals may be cut off, and the conductors resulted are separated by a certain distance to short-circuit RF signals, thus a distributed parameter capacitor is realized.

A direct current bypass device is integrated directly in the apparatus for making a base station compatible with a high-gain TMA in this embodiment. It is adequate to install the apparatus, and an extra direct current bypass device is not needed, thus simplifying the installation.

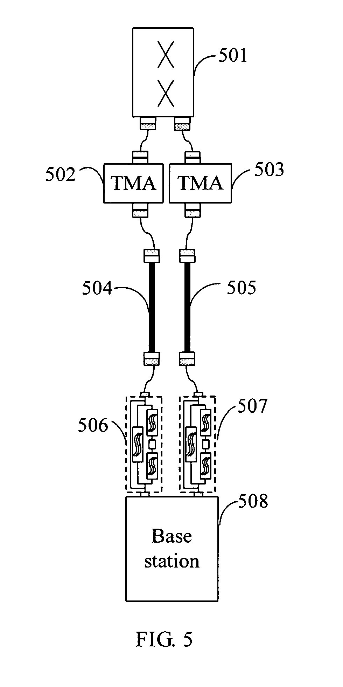

The third embodiment further provides a base station system including an apparatus for making a base station compatible with a high-gain TMA, as shown in FIG. 5.

The base station system includes: a TMA 502, a TMA 503, an apparatus 506 for making a base station compatible with a high-gain TMA, an apparatus 507 for making a base station compatible with a high-gain TMA, and a base station 508.

In addition, the base station system further includes: an antenna 501, a feeder 504, and a feeder 505.

The base station in this embodiment has two signal sending/receiving interfaces: one is a main signal sending/receiving interface, and the other is a diversity signal sending/receiving interface, both being able to receive uplink signals and send downlink signals. In this embodiment, two apparatuses for making a base station compatible with a high-gain TMA are used to adapt the gain for two signal sending/receiving interfaces respectively.

If the base station has more than two signal sending/receiving interfaces, more than two such apparatuses may be configured according to the number of interfaces.

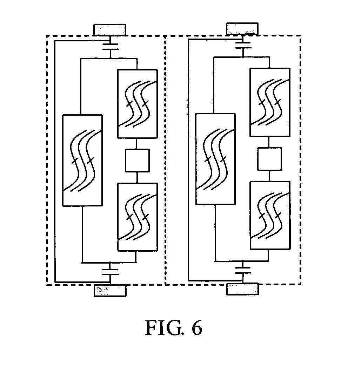

The fourth embodiment of the present invention relates to an apparatus for making a base station compatible with a high-gain TMA, as shown in FIG. 6.

Unlike the apparatus in the third embodiment, this embodiment integrates two apparatuses for making a base station compatible with a high-gain TMA into one entity, thus saving the materials for manufacturing the apparatuses. In practice, more than two apparatuses may be integrated into one entity according to the specific conditions.

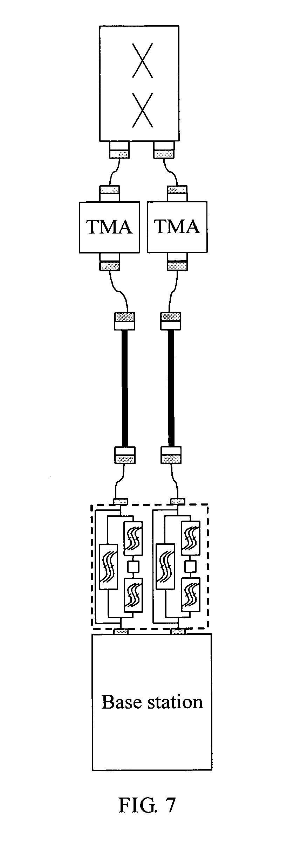

FIG. 7 shows a base station system including such an apparatus for making a base station compatible with a high-gain TMA.

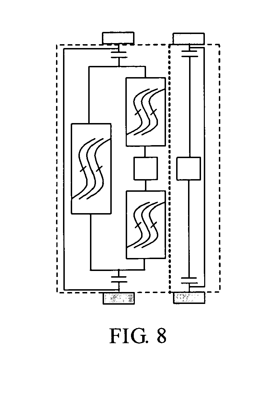

The fifth embodiment of the present invention relates to apparatuses for making a base station compatible with a high-gain TMA, as shown in FIG. 8.

Unlike the apparatus in the fourth embodiment, one of the apparatuses does not include any filter; instead, the apparatus uses an attenuator to attenuate uplink signals directly. This design is applicable when some signal sending/receiving interfaces in the base station have no downlink signal, and saves the cost of manufacturing the apparatus. Depending on the specific conditions of the base station, other different designs are also applicable. For example, if the base station has 4-way diversity receiving interfaces (three interfaces are incapable of transmitting downlink signals), the filter may be removed from the apparatuses for three of the diversity receiving interfaces to save costs.

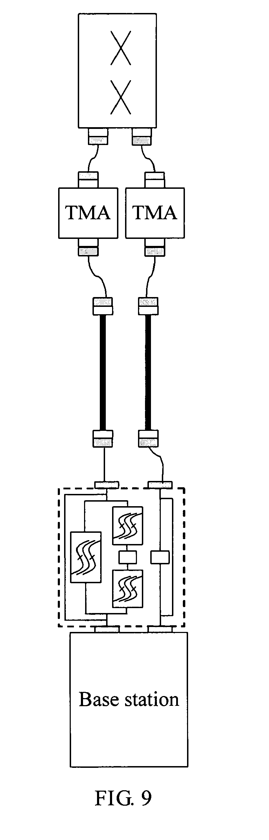

FIG. 9 shows a base station system including such an apparatus for making a base station compatible with a high-gain TMA.

In the apparatus and the method for making a base station compatible with a high-gain TMA in the foregoing embodiments, it is assumed that the base station has one sector. If the base station to be upgraded has multiple sectors, similar methods and apparatuses may be applied to each sector to make the base station compatible with the high-gain TMA.

In conclusion, in the case of upgrading a base station system, the apparatus for making a base station compatible with a high-gain TMA in the embodiments may be used to overcome the incompatibility between the new base station and the gain of the existing TMA without modifying the existing TMA and the new base station, and avoid the expenditure of purchasing a new TMA. Because it is not necessary to climb the tower to replace the existing TMA, massive labor costs are saved, and the cost and the difficulty of the upgrade are reduced drastically on the whole.

The above descriptions are merely embodiments of the present invention, but not intended to limit the scope of the present invention. Any modifications or variations that can be derived by those skilled in the art should fall within the scope of the present invention.

## Claims

1. A method for making a base station compatible with a high-gain Tower Mounted Amplifier, TMA, **characterized by** comprising:
receivingan uplink signal sent by the TMA;
attenuating the uplink signal from the TMA; and
sending the attenuated uplink signal to the base station.

2. The method of claim 1, further comprising:
forwarding a downlink signal sent by the base station to the TMA.

3. An apparatus for making a base station compatible with a high-gain Tower Mounted Amplifier, TMA, **characterized by** comprising:
a downlink signal filter, electrically coupled between a first port and a second port of the apparatus, and adapted to transmit downlink signals and isolate uplink signals;
a first uplink signal filter, electrically coupled between the first port and a signal attenuator, and adapted to transmit uplink signals and isolate downlink signals;
a second uplink signal filter, electrically coupled between the second port and the signal attenuator, and adapted to transmit uplink signals and isolate downlink signals; and
the signal attenuator, electrically coupled between the first uplink signal filter and the second uplink signal filter, and adapted to attenuate uplink signals.

4. The apparatus of claim 3, further comprising:
a direct current bypass device, electrically coupled between the first port and the second port, and adapted to supply power to the TMA;
a first capacitor, electrically coupled between the first port and a common end of the downlink signal filter and the first uplink signal filter, and adapted to isolate direct current signals; and
a second capacitor, electrically coupled between the second port and a common end of the downlink signal filter and the second uplink signal filter, and adapted to isolate direct current signals.

5. The apparatus of claim 4, wherein:
the signal attenuator is a parameter-variable signal attenuator or a parameter-invariable signal attenuator;
the signal attenuator employs a resistor network or a coupler or a filter; and
the first capacitor and the second capacitor are distributed parameter capacitors.

6. A base station system, comprising a base station and a Tower Mounted Amplifier (TMA), and further comprising:
an apparatus for making the base station compatible with a high-gain TMA, electrically coupled between the TMA and the base station, and adapted to: receive an uplink signal sent by the TMA, attenuate the uplink signal from the TMA, and send the attenuated uplink signal to the base station.

7. The base station system of claim 6, wherein the apparatus for making the base station compatible with the high-gain TMA comprises:
a downlink signal filter, electrically coupled between a first port and a second port of the apparatus, and adapted to transmit downlink signals and isolate uplink signals;
a first uplink signal filter, electrically coupled between the first port and a signal attenuator, and adapted to transmit the uplink signals and isolate the downlink signals;
a second uplink signal filter, electrically coupled between the second port and the signal attenuator, and adapted to transmit the uplink signals and isolate the downlink signals; and
the signal attenuator, electrically coupled between the first uplink signal filter and the second uplink signal filter, and adapted to attenuate the uplink signals.

8. The base station system of claim 7, further comprising:
a direct current bypass device, electrically coupled between a power supply output end of the base station and the TMA, and adapted to supply power to the TMA.

9. The base station system of claim 7, wherein the apparatus for making the base station compatible with the high-gain TMA further comprises:
a direct current bypass device, electrically coupled between the first port and the second port, and adapted to supply power to the TMA;
a first capacitor, electrically coupled between the first port and a common end of the downlink signal filter and the first uplink signal filter, and adapted to isolate direct current signals; and
a second capacitor, electrically coupled between the second port and a common end of the downlink signal filter and the second uplink signal filter, and adapted to isolate the direct current signals.

10. The base station system of claim 9, wherein:
the signal attenuator is a parameter-variable signal attenuator or a parameter-invariable signal attenuator;
the signal attenuator employs a resistor network or a coupler or a filter; and
the first capacitor and the second capacitor are distributed parameter capacitors.
